**Europäisches Patentamt**

**European Patent Office**

**Office européen des brevets**

(19)

(11) **EP 1 106 788 A1**

(12) # EUROPEAN PATENT APPLICATION

(43) Date of publication:
**13.06.2001 Bulletin 2001/24**

(51) Int Cl.⁷: **F01K 23/06**, B01J 19/08, C10G 2/00

(21) Application number: **99811126.4**

(22) Date of filing: **09.12.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ABB RESEARCH LTD.**
**8050 Zürich (CH)**

(72) Inventors:
• **Eliasson, Baldur**
  **5413 Birmenstorf (CH)**

• **Kogelschatz, Ulrich, Dr.**
  **5212 Hausen (CH)**
• **Liu, Chang-jun, Dr., 5-304 Building No. 32**
  **Tianjin 300072 (CN)**

(74) Representative: **ABB Patent Attorneys**
**c/o ABB Business Services Ltd,**
**Intellectual Property (SLE-I),**
**Haselstrasse 16/699**
**5401 Baden (CH)**

(54) **Co-generation of electricity and hydrocarbons**

(57)    A method of co-generating electricity and a product stream containing at least one normally liquid hydrocarbon; the method comprising the steps of combusting a first portion (2) of a composition (1) being substantially gaseous under normal conditions and containing methane to operate a power generation system producing electric power; using a portion, at least, of the electric power to operate a dielectric barrier discharge reactor (6) including a first electrode means, a second electrode means and at least one layer of a normally solid dielectric material positioned between the first and the second electrode means; feeding a second portion (10) of the composition into the reactor (6); submitting the second portion of the composition within the reactor in the presence of a normally solid catalyst to a dielectric barrier discharge; and controlling the dielectric barrier discharge to convert the second portion (10) of the composition into the product stream containing the at least one normally liquid hydrocarbon (19).

Fig. 1

**Description**

Background of the Invention

The present invention relates to a method of co-generating electricity and a product stream containing at least one normally liquid hydrocarbon as set forth in claim 1.

One of the major problems facing mankind is the global warming of the atmosphere due to emissions of greenhouse gases, among which methane and carbon dioxide contribute most. The development of a feasible utilization of methane and/or carbon dioxide would signify the attainment of either slowing down a build-up of greenhouse gases in the atmosphere and a better carbon resource utilization.

Due to the considerable reservoir of natural gases and other methane-containing resources, the direct conversion of methane and methane-containing gaseous compositions, respectively, into liquid hydrocarbons represents a research topic of increased importance. Beside the positive impact on the greenhouse effect, a feasible conversion of the aforementioned kind would guarantee a reliable supply of liquid hydrocarbons, which are of vital importance to the world, especially to the industrialized countries.

Prior Art

Since methane is the principal constituent of natural gas the major research activity has focused on the transformation of methane. In particular, intense research efforts have been conducted all over the world to develop processes for the direct conversion of methane into higher, normally liquid hydrocarbons. The yield of desired products, however, is still too low for an industrial application, as pointed out by I. Pasquon in Bull. Soc. Chim. Fr. 131 (1994) 452-462 (report being incorporated herein for all purposes by way of reference), and further improvements are required including exploitation of new technologies.

Plasmas have been found to be a versatile tool for the development of new industrial processes and products. The properties of plasmas can be modified and a distinction is made between thermal plasma and nonthermal plasma differing markedly in both discharge characteristics and applications.

The energy distribution of the gas molecules, ions and electrons in thermal plasma indicates that the system is in thermal equilibrium and thus close to thermodynamic equilibrium. The temperature in the discharge region is uniformly very high for all particles. Moreover, there is a high energy flux in the plasma volume as well as at the electrodes if present. Thermal plasmas are therefore often called "hot plasmas".

Nonthermal plasmas, in contrast, are far from thermodynamic equilibrium. Nonthermal plasmas have comparatively low gas temperatures and energy-conversion rates. Thus, the electrons in these plasmas have typically a very much higher temperature than the heavy ions and neutral particles, e.g. the electrons of such a non-equilibrium plasma can reach temperatures of 10'000 to 100'000 K while the gas temperature remains close to room temperature. Nonthermal plasmas are therefore also named "cold plasmas" typically including silent discharges. It is to be noted that a characteristic of the silent discharge is the presence of a dielectric. Therefore silent gas discharges are also referred to as dielectric barrier discharges.

Plasma pyrolysis of methane has been operated for a long time to produce acetylene and carbon black with hydrogen as a by-product. Such plasma cracking usually requires a thermal plasma. As indicated, transformations via thermal plasma are typically high temperature processes and, moreover, require often an extra immmediate quenching step to get a sufficient selectivity of the desired products. This requires a complex system. A lot of energy is thereby consumed and wasted respectively due to the heating and cooling of the reaction gases that reduces the energy-efficiency and leads though to an significant increase of the production costs.

Recently, non-thermal plasmas have been found to be effective in the activation of methane at low temperature and atmospheric pressure. In DE 196 05 547 as well as in a report by L.M. Zhou, B. Xue, U. Kogelschatz and B. Eliasson in Plasma chemistry and Plasma Processing, Vol. 18 (1998), No. 3, 375-393 (this report being incorporated herein for all purposes by way of reference) a method of producing methanol by subjecting a gaseous mixture containing methane and oxygen and/or nitrogen to a dielectric barrier discharge is disclosed. The utilization of mixtures of methane and carbon dioxide for the synthesis of methanol in such silent gas discharge reactors has also been described. However, the reported maximum yield of methanol was only about 1%. An overview of the progress in this field has been summarized by A. Bill et al. in Energy Conversion Management Vol. 38 (1997) Supplement pp S415-S422 (this report being incorporated herein for all purposes by way of reference).

In the attempt to shift the selectivity towards the formation of higher and normally liquid hydrocarbons the inventors of the DE 196 05 547 conducted a series of experiments, in which pure methane was submitted to a dielectric barrier discharge (B. Eliasson, U. Kogelschatz, E. Killer and A. Bill in Proceedings of the 11th World Hydrogen Energy Conference, Stuttgart, Germany, June 23-28, 1996, Vol. 3, 2449-2459; this report being incorporated herein for all purposes by way of reference). The major products were hydrogen and ethane with small amount of higher hydrocarbons. However, carbon black in fine particles was formed, in particular on the surface of the dielectric material, as well as significant amounts of undesired solid carbonaceous species and some plasma polymers. Particularly, the formation of carbon black is highly undesired since it changes the performance of the dielectric barrier discharge plasma and induces some uncertain phenomena for long term operation.

However, the feasibility and applicability of methods of directly transforming methane and gaseous compositions containing methane respectively, have, furthermore, to be evaluated by taking into consideration that most of the natural methane resources are located in remote sites, i.e. being far away from the place it will be consumed or chemically used on a large scale. In those remote locations there is often no economic incentive for using these natural methane resources due to the high cost of collection and transportation. It is, therefore, not surprising that every year about 65 megatons carbon in the form of gaseous hydrocarbons, mainly methane, are wasted through flaring. Flaring results in unnecessary additional carbon dioxide emissions and is likely to be banned in the near future. The superiority of liquid hydrocarbons over gaseous energy carriers resides, inter alia, in the high energy density of liquids at relatively low weight and volume resulting in easy transportation and storage.

Thus, the prior art methods of directly transforming methane and gaseous compositions containing methane respectively into higher and normally liquid hydrocarbons show poor economics, low conversions and/or low yields making them not suitable for practical applications. Moreover, the processes developed by far are not suitable and/or not economic for the utilization and exploitation respectively of gaseous compositions containing methane in remote sites.

Objects of the Invention

Accordingly, it is an object of the present invention to provide for a method of generating liquid hydrocarbons from methane-containing gaseous compositions, which method can be operated at remote methane resources in an economic manner.

It is another object of the present invention to provide for a method of generating liquid hydrocarbons from gaseous compositions containing methane, which method allows, at least substantially, to provide for its own electric power supply.

It is a further object of the present invention to provide for a method of co-producing chemical or liquid fuel products, such as normally liquid hydrocarbons, and electric power.

It is again a further object of the present invention to provide for a method of converting a methane-containing gaseous composition into a product stream containing at least one normally liquid hydrocarbon, which method can be carried out economically and preferably at low pressures and low temperatures, i.e. close to ambient conditions and, moreover, which method is operable in-situ at a source, in particular at a natural source, of such a compostion.

It is another object of the present invention to provide for a method of producing liquid hydrocarbons from methane-containing gaseous compositions in a direct manner, i.e. avoiding the need of expensive formation of intermediates, and, moreover, which method is operable in-situ at the sources of such compostions.

It is again a further object of the present invention to provide for a method of generating electricity and of transforming gaseous compositions containing methane into a product stream of at least one normally liquid hydrocarbon, which method contributes to a better utilization of carbon resources and reduces the emissions of greenhouse gases.

Further objects and advantages of the present invention will become apparent as this specification proceeds.

Brief Summary of the Invention

We have found that the objects can be achieved according to a first general embodiment of the invention by a method as set forth in claim 1. Accordingly, the invention provides for a method of co-generating electricity and a product stream containing at least one normally liquid hydrocarbon that comprises the steps of combusting a first portion of a composition being substantially gaseous under normal conditions and containing methane to operate a power generation system producing electric power; using a portion, at least, of the electric power to operate a dielectric barrier discharge reactor including a first electrode means, a second electrode means and at least one layer of a normally solid dielectric material positioned between the first and the second electrode means; feeding a second portion of the composition into the reactor; submitting the second portion of the composition within the reactor in the presence of a normally solid catalyst to a dielectric barrier discharge; and controlling the dielectric barrier discharge to convert the second portion of the composition into the product stream containing the at least one normally liquid hydrocarbon.

Definitions, Detailed Description of Preferred Embodiments and Elements of the Invention

The term "about" as used herein before any numeral implies a variation of typically ± 10%.

The term "normal" with regard to boiling points, boiling ranges and the like indicates that the values are understood as being corrected for "normal conditions", i.e. a temperature of 25°C and an atmospheric pressure of 1013 mbar. In analogy, the term "normal" with respect to physical states of matter and the like indicates that it is referred to said normal conditions.

The term "layer" is used herein to refer to any planar or curved stratum having a width dimension that is substantially larger than its thickness dimension; typically, the width:thickness ratio is at least 10:1 and generally well above that value.

In the context of the present invention the term "hydrocarbons" stands for products consisting of hydrogen and carbon atoms and consisting essentially of aliphatic hydrocarbons either saturated, such as alkanes, and/or unsaturated, such as alkenes and/or alkynes. Cycloaliphatic and/or aromatic hydrocarbons may, however, be present in minor amounts. Hydrocarbons obtained by the inventive method generally do not contain pollutants, like sulfur and/or heavy metal elements. This represents a major advantage compared to hydrocarbons produced from petroleum, in particular, when the hydrocarbons are then used as fuel. Since the reservoir of natural gas is much larger compared to the one of petroleum, as already pointed out, the present invention is therefore very valuable not only from an economic point of view but also taking ecological aspects into consideration.

Preferred examples of compositions being substantially gaseous under normal conditions and containing methane used for the present invention are, in particular, natural gas compositions. It is known that depending from the geographic origin the composition of natural gases vary. Thus, either the concentration of methane itself as well as the nature and concentration of by-components, present aside from methane, might be quite different in dependence on the various geographic origins. However, any natural gas composition containing methane can be used according to the present invention, in particular, since those natural gas compositions can be treated, adjusted, refined or purified in an appropriate manner. In particular, additional steps of treating, adjusting, refining or purifying such compositions are preferably effected prior to the combustion of the first portion of said composition and/or to the feeding of the second portion of said composition into the dielectric barrier discharge reactor. For example, combustion of hydrogen sulfide may produce very toxic or corrosive compounds and may, thus, create serious environmental and safety problems. Therefore, the content of hydrogen sulfide being present in natural gas compositions has generally to be reduced to an acceptable level, particularly, prior to combustion of said composition. The possibility of such pre-purifying steps implies, however, that even sour or super sour natural gases, i.e. natural gas compositions having a content of hydrogen sulfide up to 90%, may be used in the present invention. Further preferred additional steps of adjusting, treating, refining or purifying methane-contaning compositions, in particular natural gas compositions, in accordance with the present invention are defined in the dependent claims as well as in preferred embodiments explained further on.

Generally, the portion of a methane-containing composition which is fed into the dielectric barrier discharge reactor as used herein refers to a portion of a composition, in which the amount of methane is higher than about 35 Vol.%, preferably higher than about 45 Vol.%.

Further preferred substantially gaseous compositions containing methane used for the present invention are fermentation gas, coal-bed gas, associated gas from crude oil, landfill gas or any waste and exhaust gases deriving from industrial processes and containing methane.

Within the context of the present invention, a composition being "substantially gaseous" under normal conditions is generally understood as a composition comprising normally gaseous products in a content of at least about 90 Vol.-%, preferably of at least about 95% Vol-% and more preferably of at least about 98% Vol-%. Examples of those compositions used for the present invention are, particularly, "wet" or "rich" natural gas compositions containing, e.g., minor quantities of higher normally liquid hydrocarbons and/or water vapor.

The inventive method comprises the step of combusting a first portion of a composition being substantially gaseous under normal conditions and containing methane to operate a power generation system producing electric power. To this respect, it is within the skills of the artisan to purify or treat, in particular, the first portion of such a composition, e.g. to optimize its combustion or to adjust it to the power generation system used. Thus, prior to combustion, the first portion of the gaseous composition might be purified from hydrogen sulfide or other sulfur compounds to limit the evolution of toxic compounds as already indicated above. Moreover, it is within the knowledge of the man skilled in the art to select an appropriate power generation system and, preferably, adjust the first portion of the composition to the selected power generation system. A typical example of a power generation system producing electric power used in the present invention is an electricity generator driven by a combustion turbine system.

Moreover, it is within the skills of the artisan to select and apply any means and methods, which might be necessary or useful for transforming the electric power generated by the aforementioned combusting prior to its use for operating the dielectric barrier discharge reactor.

According to a preferred embodiment of the present invention at least the second portion of the composition further contains carbon dioxide. Typically, the inventive method comprises the additional step of adjusting the second portion of the composition so that the carbon dioxide and the methane are contained in the second portion of the composition at a molar ratio of carbon dioxide:methane of between about 1:1 to about 1:4, preferably between about 1:2 to about 1:3. Similar sources as indicated above for methane-containing compositions may be used as sources for the compositions containing methane and carbon dioxide since carbon dioxide is often a further component of the above-mentioned compositions such as fermentation gases or natural gas compositions even if additional steps may be necessary to adjust preferably the molar ratio of methane and carbon dioxide to the aforementioned preferred values.

It is, however, in accordance with and within the scope of the present invention to use any waste and exhaust gases deriving from industrial processes and containing methane and/or carbon dioxide or any other source of methane and carbon dioxide.

Thus, in a further preferred embodiment of the invention the method comprises the additional step of extracting a portion, at least, of said carbon dioxide from flue gases of said combusting of said first portion of said composition. This further contributes to a better utilization of carbon resources and, moreover, reduces the emissions of greenhouse gases.

In a further preferred embodiment of the invention at least the second portion of the composition consists essentially of methane. Generally, a "portion of a composition consisting essentially of methane" as used herein refers to a portion of a composition, in which the amount of methane is higher than about 75 Vol.-%. According to another preferred embodiment of the present invention the at least second portion of the composition consists of substantially pure methane. "Substantially pure" as used herein refers to a purity of at least about 95 Vol.-%, preferably of at least about 98 Vol.-% and more preferably of at least about 99 Vol.-%. Preferably, the inventive method comprises the additional step of purifying the second portion of the composition to generate a substantially pure methane.

In a further preferred embodiment of the present invention the second portion of the composition is essentially free of gaseous oxygen. In this context, "essentially free" indicates that the amount of oxygen present in the second portion of the composition is lower than about 0.5 Vol.-%, preferably lower than 0.1 Vol.-% and most preferably lower than 0.01 Vol.-%. It is noteworthy, however, that no precautions are necessary to explicitly exclude gaseous oxygen or air and, therefore, traces of oxygen or air can still be present without departing from the scope of the present invention. The absence of oxygen or oxygen-containing coreactants in the feed, in the range indicated above, leads to an increase in selectivity towards higher hydrocarbon products. Therefore, in order to further shift the selectivity towards the formation of higher hydrocarbons it is preferred to omit any oxygen or oxygen containing co-reactants in the feed in the range indicated above.

In another preferred embodiment of the present invention the at least one normally liquid hydrocarbon is separated from the product stream, and normally gaseous products of said product stream are recirculated into the dielectric barrier discharge reactor.

The preferred normally solid catalyst is selected from zeolites, aluminophosphates, silicoaluminophosphates, metalloaluminophosphates and metal oxides containing OH groups. Typically, the solid catalyst is a zeolite selected from the group of zeolite X, zeolite Y, zeolite A, zeolite ZSM-5 and zeolite 13X.

In a further preferred embodiment of the invention, the normally solid catalyst comprises at least one substance selected from the group of metal ions and group IA, IIa, IB, IIb and VIII elements of the periodic table. The latter mentioned elements, i.e. alkali, earth alkali elements as well as the elements of the zinc and the copper group and the iron groups of the periodic table can be present either in ionic or atomic form. Those normally solid catalysts are synthesized by procedures generally known to the man skilled in the art, such as any type of ion exchange reactions in the case of zeolites. Examples of those solid catalysts are the zeolites NaY, NaX, NaA or Fe-ZSM-5.

Particularly, the use of zeolites as the normally solid catalyst inhibits the formation of carbon black, in particular, the precipitation of carbon black on the surface of the dielectric material, thus, allowing a long term operation of the dielectric-barrier discharge reactor. Moreover, the use of zeolites limits the growth of the hydrocarbon chain. Consequently, an increased yield of normally gaseous hydrocarbons and/or liquid hydrocarbons, particularly of normally liquid hydrocarbons having a normal boiling range of between about 50°C and about 210°C results. Furthermore, applying "shape-selective catalysts", such as zeolites, leads to an increased tendency to form branched hydrocarbons, in particular, of normally liquid branched hydrocarbons representing a high-quality fuel. Additionally, the function of catalysts, in particular of the zeolites, includes the chemisorption of methane and the limitation of total decomposition of methane to carbon and hydrogen.

The term "shape-selective catalyst" is intended to refer to a catalyst that owns a special structure to limit the diffusion of the reacting molecules and the formed product molecules through its framework. Only molecules with diameters smaller than the openings or pores of the shape-selective catalyst can pass through the catalyst. Moreover, an additional constraint is imposed by the size and shape of the pores with respect to possible transition states of the reaction.

Furthermore, the use of zeolites as the normally solid catalyst offers the advantage of having high concentrations of OH groups on the zeolite surfaces, i.e. on the outer surfaces of the zeolite as well as within the zeolite cavities. In addition to the high concentration of OH groups on zeolite surfaces, an important characteristic of zeolites is the natural coulombic field formed within the zeolite framework. Within this context, it should be noted that both the concentration of OH groups and the strength of the natural coulombic field are controllable and adjustable. Generally, these two features allow the zeolites to easily respond to an external electric field, i.e. the zeolite becomes electrically charged more easily. The control of the dielectric barrier discharge according to the invention allows though to control these charges and electrostatic fields and, therefore, to control zeolite activity and selectivity in the conversion of a substantailly gaseous composition into a product stream containing normally liquid hydrocarbons, e.g. usable as fuel.

The present invention offers, in particular, the advantage to provide for a method which is capable of being operated independently of the existing infrastructure, in particular of the existing infrastructure in view of the electricity and/or energy supply for its operation. Moreover, the inventive method is easily established on-site and in-situ of a methane-containing gas source in short time, since the inventive method makes use, in particular, of a dielectric barrier discharge reactor for the conversion according to the invention, which reactor is generally much smaller in scale and is operated at much lower pressures and temperatures than conventional reactors for methane conversions. consequently, the method and the corresponding devices necessary for its operation in accordance with the present invention can be relocated and easily transported to further sites. Moreover, the inventive method does not require either high setup investment or expensive operation cost.

Thus, in a particularly preferred embodiment of the present invention, the inventive method is operated in-situ at a source of a gas containing methane, preferably at a source of a natural gas. Aside from the aforementioned advantages the conversion of methane - the principal component of natural gas and the second most important greenhouse gas - into liquid hydrocarbons in-situ and on-site of a gas source, preferably at a natural gas source, is an elegant way of increasing the storability and transportability of the gas, and thus, increasing the economic incentive for using those resources.

### Brief Description of the Drawings

For a better understanding of the nature and scope of the present invention - and not to limit the invention- preferred embodiments and details of the inventive method are now described in more detail by reference to the drawing, in which:

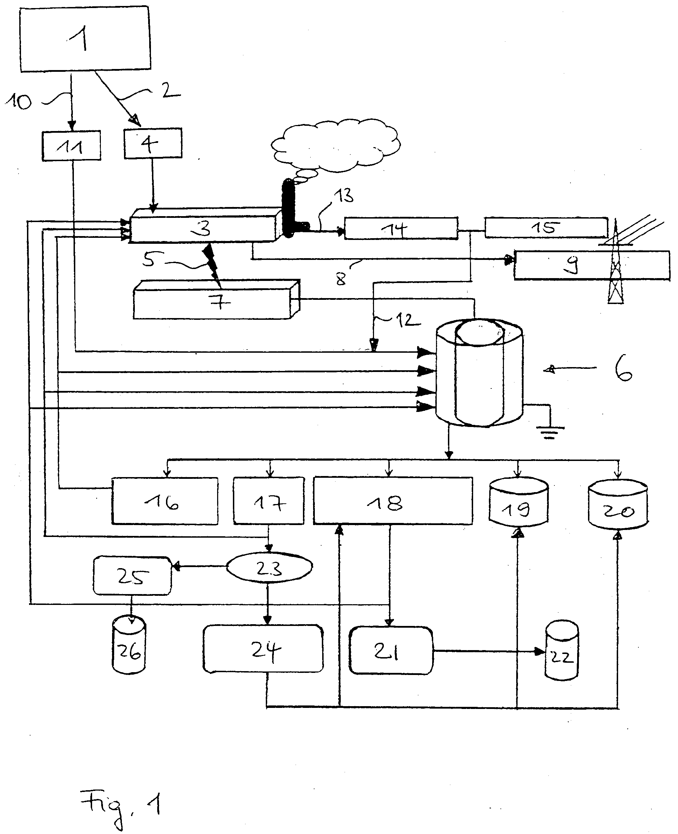

Fig. 1 is a diagrammatic flow diagram of a preferred embodiment of the present invention.

### Detailed Description of the Drawings

The diagrammatic flow diagram of Fig. 1 shows a preferred embodiment of the inventive method operated in-situ at a source 1 of a natural gas composition containing methane. A first portion 2 of this composition is combusted to operate a power generation system 3, e.g. an electricity generator driven by a combustion turbine system, producing electric power. In the preferred embodiment shown, first portion 2 of the composition is refined prior to combustion in a first reactor 4, e.g. to reduce the content of hydrogen sulfide to an acceptable level. At least a portion 5 of the generated electric power is used to operate a dielectric barrier discharge reactor 6 (abbreviated as DBD reactor). To this purpose a high voltage generator 7 is used to transform the portion 5 of the generated electric power in an appropriate manner. The other portion 8 of the electric power is consumed by other reactors, as will be explained further on, or could be fed to the regional electricty network 9 serving other customers.

A second portion 10 of the natural gas composition is fed into DBD reactor 6 after being adjusted in a second reactor 11. Typical such adjustments are either purifying the natural gas composition, in particular reducing the content of hydrogen sulfide as indicated above, and adjusting the content of methane in second portion 10 of the natural gas composition. These type of reactors 11 as well as the aforementioned first reactor 4 are known to the man skilled in the art and will not be further explained herein.

In the preferred embodiment shown second portion 10 of the composition fed into DBD reactor 6 also contains carbon dioxide, at least a portion 12 of which is extracted from flue gases 13 of the aforementioned combustion and separated and purified by conventional means 14. Such a separation of carbon dioxide and its utilization, at least a portion of it, as shown in this preferred embodiment of the invention, provides for a further contribution for better utilization of carbon resources and reduction of emissions of greenhouse gases. When the amount of separated and purified carbon dioxide deriving from flue gases 13 is exceeding the amount of carbon dioxide fed into DBD reactor 6, it is obvious that the excess of purified carbon dioxide can be sequestrated by means 15 and/or used for other purposes.

In the diagrammatic flow diagram of Fig. 1, means for feeding the second portion 10 of the composition, now further containing carbon dioxide, into DBD reactor 6 are omitted for sake of clarity. However, these means are known to the skilled artisan and the appropriate selection of those means including the incorporation of carbon dioxide within the second portion 10 is obvious and needs no further explanation.

The dielectric barrier discharge is a high pressure non-equilibrium discharge which occurs when alternating voltages are applied to a gas space between two electrodes separated by a non-conducting medium. The amplitude of the alternating high voltage has to be high enough to cause electrical breakdown in the gas space. In Fig. 1 DBD reactor 6 is only symbollically shown. However, a dielectric barrier discharge reactor according to the invention comprises a first electrode and a second electrode, one of which is connected to high voltage AC generator 7, whereas the other electrode is grounded. Typically, both electrodes have an essentially cylindrical form. The electrodes are generally made of corrosion-resistant metals or alloys or of materials covered by at least one layer of an electrically conducting substance. In such a DBD reactor configuration at least one layer of a dielectric material is present in the path of the feed, i.e. positioned between the electrodes. Typically these dielectric layers are a glass, quartz or ceramic tubes having a thickness of between about 0.1 mm and about 5 mm and, preferably, cover the effective surface of at least one of the electrodes. The shape-selective catalyst present in the reactor when the second portion of the substantially gaseous composition is submitted to the dielectric discharge is typically formed also in essentially cylindrical form and, preferably, is provided to cover the dielectric layer. Typically, the dielectric tube serves as support for the solid catalyst, which is preferably in powder form and mounted in a piece of gas-permeable quartz fleece and wrapped around the outer surface of the dielectric tube. Further catalyst support arrangements preferably used for the present dielectric barrier discharge reaction are described in the DE-197'35-'785 (the disclosure of which being incorporated herein for all purposes by way of reference).

It is obvious that the form and the size of the solid catalyst, i.e. whether it is applied in powder form or as grains of different sizes and the manner by which the catalyst is supported, i.e by means of the dielectric material and by means of an additional support respectively, can be modified within the scope of the present invention. Moreover, the skilled artisan knows further dielectric barrier discharge reactor configurations and is capable of choosing the appropriate configuration. So, the electrodes and the dielectric material can also be arranged in an essentially planar form. Further examples of the dielectric material are glass, as indicated, as well as quartz, ceramics, $ZrO_2$ or $Al_2O_3$.

The second portion 10 of the composition, now containing additionally carbon dioxide passes through a discharge gap, where it is exposed to the dielectric barrier discharge. The dielectric barrier discharge is effected by an AC potential applied between the first electrode and the second electrode means. The preferred AC potential being in the range of from about 6 kV to about 100 kV and the frequency of the AC potential preferably being in the range of from about 50 Hz to about 1 MHz. Generally a specific electric power up to about 1-25 kW/m$^2$ of electrode area is fed into the discharge reactor by automatically adjusting the amplitude and frequency of the applied voltage. As indicated above, an operating pressure in the range of from about 0.01 bar to about 30 bar, preferably from about 0.1 bar to about 10 bar, at an operating temperature up to about 400°C is maintained in the reactor. The flow rate is typically from about 0.1 m$^3$/hour and m$^2$ of electrode area to about 10 m$^3$/hour and m$^2$ of electrode area.

When the amplitude of applied AC electric field reaches a critical value, breakdown is initiated in the gas and a current flows from one electrode to the other. Once breakdown is initiated at any location within the discharge gap, charge accumulates on the dielectric and leads to the formation of an opposite electric field. This opposite electric field reduces the external electric field within the gap and interrupts the current flow at this location in a few nanoseconds to form a microdischarge. The duration of the current pulse relates to pressure and properties of gases involved and the dielectrics applied. A large number of such microdischarges will be generated when a sufficiently high AC voltage is applied. The principal advantages of dielectric barrier discharge are that non-equilibrium plasma conditions are established at about atmospheric pressure and that the entire electrode area is effective for discharge reactions.

Generally, the conversion of compositions consisting essentially of methane or compositions consisting of substantially pure methane leads to an almost complete, i.e. almost 100%, selectivity to higher hydrocarbons, i.e. hydrocarbons having at least two carbon atoms. On the other hand, the presence of carbon dioxide leads to a complex product mixture containing in particular syngas (CO and H$_2$), as is schematically shown in Fig. 1. Beside from unreacted feed 16, the DBD reaction leads to syngas 17, gaseous hydrocarbons 18, i.e. hydrocarbons having 2 to 4 carbon atoms, and normally liquid hydrocarbons, which could be separated by conventional means into e.g. gasoline components 19, i.e. hydrocarbons with 5 to 11 carbons and gas oil components 20, i.e. hydrocarbons with typically more than 12 carbon atoms in the molecules. Other and/or further fractionation of the formed normally liquid hydrocarbons, e.g. by conventional distillation means, is of course possible and typically effected, but omitted in Fig. 1 for sake of clarity. As already indicated, the normally liquid hydrocarbon products contain a large amount of branched hydrocarbons representing a better fuel production.

Unconverted feed 16 is typically recirculated into DBD reactor 6. The gaseous hydrocarbons 18 are converted by a conventional catalytic reactor 21 to ethylene 22 or are recirculated into electricity generator 3 for electricity generation. The syngas 17 is preferably first compressed by means of a compressor 23 and then converted by a conventional Fischer-Tropsch reactor 24 leading again to gaseous hydrocarbons 18, gasoline components 19 and/or gas oil components 20, or is converted by a methanol catalytic reactor 25 forming products 26 comprising in particular methanol and dimethyl ether (DME). Preferably, all gaseous products obtained by the dielectric barrier discharge reaction, i.e. particularly unconverted feed 16, syngas 17 and normally gaseous hydrocarbons, are recirculated in the DBD reactor 6. However, in another preferred embodiment of the invention only unconverted feed 16 and gaseous hydrocarbons 17 are recirculated into the DBD reactor 6, whereas syngas 16 is fed into the electricity generator 3. In a further preferred embodiment of the invention all gaseous products 16, 17, 18 are fed into the electricity generator 3.

The present invention thus opens up the way to establish an integrated plasma methane conversion system as shown in Fig. 1, in particular for the utilization of remote methane resources. As already indicated, such an integrated plasma methane conversion system is as compared to the conventional catalytic methane conversion system small in size and can be easily transported. It is, moreover, within the knowledge of the man skilled in the art to benefit from the present invention and add further reactors to such an integrated system, such as a second dielectric barrier discharge reactor converting a methane-containing gaseous composition into methanol by co-feeding oxygen and/or nitrogen but in the absence of a catalyst. Moreover, other processes making use of, or at least a portion of, the carbon dioxide deriving from flue gases of the aforementioned combustion in accordance with the present invention for the production of refined chemical products can also be incorporated within such an integrated system and is well within the konwledge of the skilled artisan. Those additional processing steps are operated by electric power generated in accordance with the present invention.

Examples

Dielectric barrier discharges of different compositions in accordance with the invention are described in the following examples. The corresponding results, i.e. the conversion of methane and/or carbon dioxide as well as the selectivity of the formed products are calculated by way of the following equations:

$$\text{Conversion }[CH_4] = \{([CH_4]_{in} - [CH_4]_{out})/[CH_4]_{in}\} \times 100\%$$

$$\text{conversion }[CO_2] = \{([CO_2]_{in} - [CO_2]_{out})/[CO_2]_{in}\} \times 100\%$$

$$\text{Selectivity }[prod.] = \{(\text{number of carbon atoms of prod.} \times [prod.]_{out})/\text{total carbon amount converted}\} \times 100\%$$

**Example 1**

The feed gases, i.e. a mixture containing 50% methane and 50% carbon dioxide, were introduced into the system flowing downstream through the reactor. The flow rate is 200 ml/min. The catalyst used is 13X zeolite. An alternating voltage of about 10 kV with a frequency of about 30 kHz is applied to the electrodes. A dielectric barrier discharge is thus initiated. The operating temperature is maintained at about 200°C and the operating pressure is about 11 kPa. A back pressure valve at the exit of the reactor was used to adjust the pressure. A MTI (Microsensor Technology Inc., M20011) dual-module micro gas chromatograph containing a Poraplot Q column and a molecular sieve 5A Plot column with a TCD detector was used to detect gaseous products. The gas sample was heated by a heated line to avoid possible condensation before it was taken into the GC. The liquid sample was also gas-chromatographically analysed. The results of the synthesis are reported in Table 1.
The analysis of the gas sample reveals formation of carbon monoxide CO, alkanes having 2 to 5 carbon atoms ($C_2$-$C_5$) such as iso-butane and iso-pentane, unsaturated hydrocarbons such as ethylene and acetylene, small amount of oxygenated products such as $CH_3OCH_3$, methanol and ethanol as well as water and hydrogen. The analysis of the liquid sample shows a high yield of gasoline components ($C_5$-$C_{11}$) being rich in branched hydrocarbons. The ratio branched:linear hydrocarbons is about 9:1.
In Table 1, results from recently reported catalytic Fischer-Tropsch synthesis (M. J. Keyser, R.C. Everson and R.L. Espinoza in Applied Catalysis A, Vol. 171 (1998) 99; this report being incorporated herein for all purposes by way of reference) are additionally listed for sake of comparison. Evidently, the product distribution is very similar for both processes, i.e. obtained by the inventive dielectric barrier discharge synthesis (DBD synthesis) and the Fischer-Tropsch synthesis (F-T synthesis). However, the inventive method operates at low or atmospheric pressures, whereas Fischer-Tropsch synthesis is performed at very high pressures. Moreover, the inventive method directly converts methane-containing compositions into product streams containing normally liquid hydrocarbons, and thus, obviates the need for syngas preparation.

Table 1.

| | catalytic F-T-synthesis | our DBD Synthesis |
|---|---|---|
| gas temperature (°C) | 220 | 202 |
| gas pressure (kpa) | 500 | 11 |
| $H_2$/CO | 1/1 | |

Table 1.   (continued)

|  | catalytic F-T-synthesis | our DBD Synthesis |
|---|---|---|
| $CH_4/CO_2$ |  | 1/1 |
| Bed length (m) | 0.25 | 0.30 |
| GHSV ($h^{-1}$) | 222 |  |
| Flowrate (ml/min) |  | 200 |
| Power (w) |  | 500 |
| CO conversion (%) | 14.0 |  |
| $CO_2$ conversion (%) |  | 47.5 |
| $CH_4$ conversion (%) |  | 48.8 |
| carbon atom selectivity (%) |  |  |
| CO |  | 27.9 |
| $C_1$ | 10.8 |  |
| $C_2$ | 5.4 | 8.9 |
| $C_3$ | 14.1 | 3.7 |
| $C_2$ | 9.2 | 1.0 |
| $C_5^+$ | 50.5 | 58.2 |
| $C_1$-OH | 2.0 | 0.26 |
| $C_2$-OH | 3.8 | 0.00 |
| 1-$C_3$-OH | 2.6 |  |
| 1-$C_4$-OH | 0.4 |  |
| $C_5^+$-OH | 0.19 |  |

### Example 2

A gas mixture containing 80% methane and 20% carbon dioxide is passing through the gap between the electrodes with the catalyst layer. The flow rate is 0.5 Nl/min. The catalyst used is 13X zeolite. An alternating voltage of about 10 kV with a frequency of about 30kHz is applied to the electrodes. A dielectric barrier discharge is thus initiated. The operating temperature is maintained at about 150°C and the operating pressure is about 1 bar. The product essentially consists of liquid fuel ($C_5$ to $C_{11}$), syngas ($CO/H_2$) and light gaseous hydrocarbons ($C_2$ and $C_3$). The liquid fuel product, which is rich in branched hydrocarbons, is collected in a condenser. Similar conversions and selectivities as reported for Example 1 are found.

### Example 3

The feed gases, i.e. a mixture containing 66.7% methane and 33.3% carbon dioxide, were introduced into the system flowing downstream through the reactor. The flow rate is 150 ml/min. The catalyst used is 13X zeolite. An alternating voltage of about 10 kV with a frequency of about 30 kHz is applied to the electrodes. A dielectric barrier discharge is thus initiated. The operating temperature is maintained at about 150°C and the operating pressure is about 25 kPa. Under such conditions, methane conversion is 39.5% and carbon dioxide conversion is 33.8%. The selectivities for the products are:

| CO | 32.6% |
|---|---|
| $C_2$ | 17.5% |
| $C_3$ | 12.9% |
| $C_2$ | 6.6% |
| $C_5^+$ | 29.3% |

### Example 4

The feed gas, i.e. methane, was introduced into the system flowing downstream through the reactor. The operative conditions were as follows: a flow rate of 150 ml/min, a temperatur of 150°C, a pressure of 1 bar and 500 W applied power. A dielectric barrier discharge is thus initiated. The catalyst used is NaX zeolite. A back pressure valve at the exit of the reactor was used to adjust the pressure. A MTI (Microsensor Technology Inc., M200H) dualmodule micro gas chromatograph containing a Poraplot Q column and a molecular sieve 5A Plot column with a TCD detector was used to detect gaseous products. The gas sample was heated by heated lines to avoid possible condenstaion before it was taken into the GC. The liquid sample was also analysed by gas chromatography. The partial pressures and selectivites of products formed in Example 4 are reported in Table 2. The conversion of methane was 26.8%.

Table 2.

| Product | Partial pressure in the gas phase (mbar) | Selectivity (%) |
|---|---|---|
| $C_2H_4$ | 8.9 | 6.9 |
| $C_2H_6$ | 28.5 | 21.9 |
| $C_2H_2$ | 10.9 | 8.4 |
| $C_3H_6$ | 4.9 | 5.7 |
| $C_3H_8$ | 18.6 | 21.5 |
| $C_4H_8$ | 0.4 | 0.6 |
| $C_4H_{10}$ | 4.0 | 6.1 |
| i-$C_4H_{10}$ | 4.1 | 6.4 |
| $C_5H_{10}$ | 0.2 | 0.4 |
| $C_5H_{12}$ | 0.6 | 1.1 |
| 2-methylbutane | 2.6 | 5.0 |
| 2,2-dimethylpropane | 0.6 | 1.1 |
| $C_6H_{14}$ | 0.2 | 0.4 |
| others | | 14.7 |

As listed in Table 2 the total selectivity for hydrocarbons having more than one carbon atom is about 100%. Most of the products are normally gaseous hydrocarbons, i.e hydrocarbons containing up to 4 carbon atoms. In particular, hydrocarbons containing two or three carbon atoms are formed. Note that products summarized as 'others' in Table 2 are substantially hydrocarbons containing 6 to 11 carbon atoms. Thus, the total yield for gasoline components, i.e hydrocarbons containing 5 to 11 carbon atoms, is 22.7%, from which a large amount are branched hydrocarbons. The latter is of importance since branched hydrocarbons represent a better fuel because of the phenomenon of engine knock.

The success in the research and development of a feasible utilization of greenhouse gases, in particular methane and carbon dioxide, which led to the present invention signify the attainment of two important objectives: First, slowing down a build-up of greenhouse gases in the atmosphere and, second, better carbon resource utilization. An extra advantage of such an utilization of these major greenhouse gases in accordance with the present invention is the fact that such synthesized liquid hydrocarbons, which are suitable as fuel, does not contain pollutants like sulfur that are usually present in coal and petroleum. Furthermore, the present invention provides for a method which is capable of being operated independently of the existing infrastructure, in particular of the existing infrastructure in view of the electricity and/or energy supply for its operation. Moreover, the inventive method provides for an economic, realizable and suitable method for an in-situ operation at a source containing methane, in particular in-situ of a natural gas site since it does not require either high setup investment or expensive operation cost.

Although certain preferred embodiments of the invention have been described herein, it will be apparent to those skilled in the art to which the invention pertains that modifications and variations of the described embodiments may be made without departing from the spirit and scope of the invention.

List of Reference Signs

1  gas source
2  first portion of a methane-containing composition
3  power generation system

4    first reactor
5    a portion of the generated electric power
6    dielectric barrier discharge reactor
7    7 high voltage generator
8    the other portion 8 of the electric power
9    regional electricty network
10   second portion of a methane-containing composition
11   second reactor
12   carbon dioxide extracted from flue gases
13   flue gases
14   carbon dioxide separation means
15   carbon dioxide sequestration means
16   unreacted feed
17   syngas
18   gaseous hydrocarbons
19   gasoline components
20   gas oil components
21   catalytic reactor
22   ethylene
23   compressor
24   Fischer-Tropsch reactor 24
25   methanol catalytic reactor
26   products comprising methanol and DME

**Claims**

1. A method of co-generating electricity and a product stream containing at least one normally liquid hydrocarbon, said method comprising the steps of:

    combusting a first portion of a composition being substantially gaseous under normal conditions and containing methane to operate a power generation system producing electric power;
    using a portion, at least, of said electric power to operate a dielectric barrier discharge reactor including a first electrode means, a second electrode means and at least one layer of a normally solid dielectric material positioned between said first and said second electrode means;
    feeding a second portion of said composition into said reactor;
    submitting said second portion of said composition within said reactor in the presence of a normally solid catalyst to a dielectric barrier discharge; and
    controlling said dielectric barrier discharge to convert said second portion of said composition into said product stream containing said at least one normally liquid hydrocarbon.

2. The method of claim 1 wherein at least said second portion of said composition further contains carbon dioxide.

3. The method of claim 2 comprising the additional step of adjusting said second portion of said composition so that said carbon dioxide and said methane are contained in said second portion of said composition at a molar ratio of carbon dioxide:methane of between about 1:1 to about 1:4, preferably between about 1:2 to about 1:3.

4. The method of claim 2 comprising the additional step of extracting a portion, at least, of said carbon dioxide from flue gases of said combusting of said first portion of said composition.

5. The method of claim 1 wherein at least said second portion of said composition consists essentially of methane.

6. The method of claim 1 comprising the additional step of purifying said second portion of said composition to generate a substantially pure methane.

7. The method of any of claims 1 to 6 wherein said second portion of said composition is essentially free of gaseous oxygen.

8. The method of any of claims 1 to 7 wherein said at least one normally liquid hydrocarbon is separated from said product stream, and normally gaseous products of said product stream are recirculated into said reactor.

9. The method of any of claims 1 to 8 wherein said normally solid catalyst is selected from zeolites, aluminophosphates, silicoaluminophosphates, metalloaluminophosphates and metal oxides containing OH groups.

10. The method of claim 9 wherein said zeolite is selected from zeolite X, zeolite Y, zeolite A, zeolite ZSM-5 and zeolite 13X.

11. The method of claim 9 or 10 wherein said normally solid catalyst comprises metal ions selected from alkali, earth alkali, and group IB, IIb and VIII elements of the periodic table.

12. The method of any of claims 1 to 11 wherein said method is operated in-situ at a source of a gas containing methane.

Fig. 1

EP 1 106 788 A1

## EUROPEAN SEARCH REPORT

| | | Application Number |
|---|---|---|
| European Patent Office | EUROPEAN SEARCH REPORT | EP 99 81 1126 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | BILL A ET AL: "GREENHOUSE GAS CHEMISTRY" ENERGY CONVERSION AND MANAGEMENT,GB,ELSEVIER SCIENCE PUBLISHERS, OXFORD, vol. 38, no. 38, 1997, pages S415-S422, XP004061633 ISSN: 0196-8904 * page S417, paragraph 1 * * page S421, paragraph 2 * | 1 | F01K23/06 B01J19/08 C10G2/00 |
| A | US 3 616 334 A (AKER WALTER W ET AL) 26 October 1971 (1971-10-26) * column 5, last paragraph; figure 4 * | 1 | |
| A | US 4 942 734 A (DESSANTI DANIEL J ET AL) 24 July 1990 (1990-07-24) * abstract; figures * | 1 | |
| | | | **TECHNICAL FIELDS SEARCHED (Int.Cl.7)**<br><br>F01K<br>B01J<br>C10G |

The present search report has been drawn up for all claims

| Place of search | Date of completion of the search | Examiner |
|---|---|---|
| THE HAGUE | 8 May 2000 | Van Gheel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

14

**ANNEX TO THE EUROPEAN SEARCH REPORT
ON EUROPEAN PATENT APPLICATION NO.**

EP 99 81 1126

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2000

| Patent document cited in search report | Publication date | Patent family member(s) | Publication date |
|---|---|---|---|
| US 3616334 A | 26-10-1971 | NONE | |
| US 4942734 A | 24-07-1990 | CA 2015909 A,C | 02-11-1991 |

EPO FORM P0459